# EUROPÄISCHE PATENTSCHRIFT

(11) **EP 2 047 133 B1**
(45) Veröffentlichungstag und Bekanntmachung des Hinweises auf die Patenterteilung: **06.01.2010**
(21) Anmeldenummer: 07765724.5
(22) Anmeldetag: 29.06.2007
(51) Int. Cl.: F16D 48/06

(54) **KUPPLUNGSSYSTEM**
CLUTCH SYSTEM
SYSTÈME D'ACCOUPLEMENT

(30) Priorität: 29.07.2006 DE 102006035134
(43) Veröffentlichungstag der Anmeldung: 15.04.2009
(73) Patentinhaber: ZF Friedrichshafen AG, 88038 Friedrichshafen (DE)
(72) Erfinder: PETZOLD, Rainer, 88045 Friedrichshafen (DE); MILLER, Martin, 88090 Immenstaad (DE); STEINBORN, Mario, 88046 Friedrichshafen (DE); HERTER, Peter, 88212 Ravensburg (DE); BITZER, Franz, 88048 Friedrichshafen (DE)
(86) Internationale Anmeldenummer: PCT/EP2007/056545
(87) Internationale Veröffentlichungsnummer: WO 2008/015061

(56) Entgegenhaltungen:
- EP-A- 1 522 754
- DE-A1- 10 231 789
- DE-A1- 19 856 297
- FR-A- 2 829 541

## Beschreibung

Die Erfindung betrifft ein Kupplungssystem gemäß dem Oberbegriff des Patentanspruchs 1. Derartige Kupplungssysteme sind aus EP 1522754 und DE 19856297 bekannt.

Automatische Kupplungssysteme mit Nass- oder Trockenkupplungen, die zur Drehmomentübertragung durch Federkraft im eingerückt Zustand beziehungsweise geschlossen gehalten werden und mittels eines pneumatischen, hydraulischen oder elektrischen Aktuators in einen ausgerückten beziehungsweise geöffneten Zustand überführt werden, sind seit langem bekannt. Derart ausgebildete Kupplungssysteme sind aufgrund eines vergleichsweise hohen Bauteileaufwandes und der für derzeit übliche Federkennlinien erforderlichen Wegsteuerung relativ teuer. Sie haben jedoch bei deren Nutzung in Fahrzeugen den großen Vorteil, dass im Falle von Störungen in der Elektrik, Pneumatik oder Hydraulik zur Steuerung und Betätigung der Kupplung während der Fahrt ein geschlossener Antriebsstrang erhalten bleibt, welches in diesem Fall den sicheren und anzustrebenden Soll-Betriebszustand darstellt.

Demgegenüber sind auch automatische Kupplungssysteme bekannt, bei denen die Kupplung nicht betätigt in einem ausgerückten Zustand gehalten wird und durch Aufbringung von pneumatischen, hydraulischen oder elektrischen Kräften mittels zumindest eines Aktuators in den eingerückten beziehungsweise geschlossenen Zustand überführbar ist. Der ausgerückte Zustand kann durch eine Federkraft unterstützt werden.

Die Betätigungssteuerung einer solchen Kupplung ist mit einem als Kolben-Zylinder-Anordnung ausgebildeten Aktuator vergleichsweise leicht und kostengünstig realisierbar. Das Öffnen der Kupplung erfolgt hierbei über ein Entlüften bzw. Entleeren des Kupplungsaktuators, während zum Schließen der Kupplung der Kupplungsaktuator mit einem Druckmittel befüllt wird. Die Drucksteuerung wird dabei üblicherweise mittels elektromagnetischer Schaltventile vorgenommen, die von einer elektronischen Steuerungs- und Regelungseinheit ansteuerbar sind. Die genannte Drucksteuerung bei der Kupplungsbetätigung ermöglicht es zudem, mit Hilfe der Kupplung, etwa im Schlupfbetrieb, unterschiedliche Drehmomente zu übertragen. Derartige mittels zumindest eines an sich bekannten Steuerventils druckgesteuerte Kupplungssysteme beziehungsweise Kupplungen sind beispielsweise aus der DE 22 22 184 A1, DE 100 18 677 A1 und der WO 2004/053349 A1 bekannt.

Wie bereits erwähnt, werden die Steuerventile für die Kupplungsbetätigung mittels einer elektronischen Steuerungs- und Regelungseinheit elektrisch angesteuert. Fällt jedoch die Spannungsversorgung des Kraftfahrzeugs aus, so ist eine ordnungsgemäße Steuerung dieser Ventile nicht mehr gewährleistet und es kann bei konventionellen Kupplungssystemen zu einem für den Fahrer unvorhersehbaren Betriebsverhalten des Kraftfahrzeugs kommen.

Daher wird für den Betrieb von automatischen Kupplungssystemen ein Betriebsverhalten gewünscht, welches bei der Fahrt des Kraftfahrzeugs, inaktiver Schaltung (Fahrgang ist eingelegt) und Ausfall der Kupplungssteuerung den Antriebsstrang in einem geschlossen Zustand bzw. die Kupplung in einem eingerückten Zustand belässt. Zudem soll das Betriebsverhalten des automatischen Kupplungssystems bei stehendem Kraftfahrzeug, laufendem Motor und geschaltetem Anfahrgang derart sein, dass bei einem Ausfall der Kupplungssteuerung der Antriebsstrang mit Hilfe der Kupplung geöffnet bzw. die Kupplung in einem ausgerückten Zustand gebracht oder in einem solchen Zustand belassen wird.

Vor diesem Hintergrund liegt der Erfindung die Aufgabe zugrunde, ein vergleichsweise einfaches und kostengünstiges automatisches Kupplungssystem mit einer "druckgeschlossenen" Kupplung zu schaffen, welches bei einem Ausfall der Spannungsversorgung für die Kupplungssteuerung zum einen während der Fahrt und bei inaktiver Schaltung die Übertragung des vollen Kupplungsmomentes oder zumindest eines definierten Teils davon gewährleistet, und welches zum anderen bei stehendem Kraftfahrzeug, laufendem Motor und geschaltetem Getriebegang das selbständige Einrücken bzw. Schließen der Kupplung verhindert.

Unter einer "druckgeschlossenen" Kupplung wird hierbei der oben beschriebene Kupplungstyp verstanden, bei dem die Kupplung drehmomentübertragend geschlossen ist, wenn auf diese mittels zumindest einem druckbetriebenen Aktuator eine Betätigungskraft wirkt.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass sich bei herkömmlichen automatischen Kupplungssystemen bei einem Ausfall der Spannungsversorgung für eine Steuerungs- und Regelungsvorrichtung der Kupplung nicht unmittelbar vorhersehbare, undefinierte Betriebszustände der Kupplung ergeben können, die innerhalb von kürzester Zeit auftreten und durch den Fahrer nicht ausreichend beherrschbar sein können.

Die Erfindung geht daher gemäß den Merkmalen des Hauptanspruchs aus von einem Kupplungssystem zur Herstellung und Unterbrechung eines Kraftflusses zwischen Motor und Getriebe eines Kraftfahrzeuges, mit einer Kupplung, die sich im unbetätigten Zustand in einem ausgerückten Betriebszustand befindet, jedoch mittels zumindest eines pneumatisch oder hydraulisch druckbeaufschlagbaren Kupplungsaktuators in einen eingerückten Betriebszustand überführbar ist, sowie mit einem oder mehreren in einem Druckleitungssystem einer Steuerventilanordnung angeordneten, den Volumenstrom des Druckmittels regelnden Ventilen, die von einer elektronischen Steuerungs- und Regelungseinheit elektrisch ansteuerbar sind.

Um bei einem Ausfall der Spannungsversorgung zum einen während der Fahrt und bei inaktiver Schaltung mit eingelegtem Gang die Übertragung des vollen Kupplungsmomentes oder eines definierten Teils davon zu gewährleisten, und um zum anderen bei stehendem Kraftfahrzeug, laufendem Motor und geschaltetem Getriebegang das selbständige Einrücken bzw. Schließen der Kupplung zu verhindern, ist vorgesehen, dass die Ventile oder das Ventil derart ausgebildet sind, dass bei einem Ausfall der Spannungsversorgung und demgemäß Ausfall der Ansteuerung der Ventile oder des Ventils durch die elektronische Steuerungs- und Regelungseinheit der aktuell eingestellte Betriebszustand der Kupplung, nämlich ausgerückter oder eingerückter Betriebszustand, erhalten bleibt.

Gemäß einer ersten vorteilhaften Ausgestaltungsvariante der Erfindung sind zumindest ein regelbares Ventil zur Befüllung und zumindest ein regelbares Ventil zur Entleerung des Kupplungsaktuators vorgesehen, wobei diese Ventile alle als "nichtangesteuert-geschlossene" Ventile ausgebildet sind. Dies bedeutet, dass sich diese Ventile in ihrem Ruhezustand in ihrer Schließstellung befinden.

Gemäß einer zweiten Ausgestaltungsvariante der Erfindung sind zumindest ein regelbares Ventil zur Befüllung und zumindest ein regelbares Ventil zur Entleerung des Kupplungsaktuators vorgesehen, wobei wenigstens ein regelbares Ventil zur Befüllung als "nichtangesteuert-offenes" Ventil ausgebildet ist, wogegen das oder die Ventile zur Entleerung als "nichtangesteuertgeschlos-sene" Ventile ausgebildet sind, und wobei dem oder den regelbaren Ventilen zur Befüllung ein bistabiles Umschalt-Ventil drucktechnisch vorgeordnet ist, welches in Abhängigkeit vom aktuellen Betriebszustand der Kupplung derart geschaltet ist, dass bei einem Ausfall der Spannungsversorgung der aktuelle Betriebszustand der Kupplung erhalten bleibt.

In diesem Zusammenhang ist unter einem "nichtangesteuert-offenen" Ventil ein solches Ventil zu verstehen, welches sich in seinem Ruhezustand in einer Durchlassstellung für das Druckmittel befindet.

Gemäß einer dritten Ausgestaltungsvariante der Erfindung sind zumindest ein regelbares Ventil zur Befüllung und zumindest ein regelbares Ventil zur Entleerung des Kupplungsaktuators vorgesehen, wobei wenigstens ein regelbares Ventil zur Befüllung und ein regelbares Ventil zur Entleerung als "nichtangesteuert-offenes" Ventil ausgebildet sind, und den "nichtangesteuert-offenen" Ventilen ein bistabiles Umschalt-Ventil derart drucktechnisch zugeordnet sowie in dem Vor- und Rücklauf des Druckleitungssystems angeordnet und in Abhängigkeit vom aktuellen Betriebszustand der Kupplung geschaltet ist, dass bei einem Ausfall der Spannungsversorgung der aktuelle Betriebszustand der Kupplung erhalten bleibt.

Vorzugsweise sind zur Befüllung und Entleerung bzw. Entlüftung jeweils mindestens zwei Ventile vorgesehen, wodurch eine erhöhte Ausfallsicherheit durch Redundanz und eine verbesserte Dynamik bei der Ansteuerung der Ventile zu verzeichnen ist. Bei diesbezüglichen Untersuchungen haben sich als regelbare Ventile zur Befüllung und Entleerung an sich bekannte 2/2-Wegeventile bewährt.

Schließlich wird gemäß einer vierten Ausgestaltungsvariante der Erfindung ein Kupplungssystem der erfindungsgemäßen Art mit einem Druckregel-Ventil vorgeschlagen, welches derart ausgebildet ist, dass es elektrisch nicht angesteuert offen ist oder elektrisch nicht angesteuert geschlossen ist oder elektrisch nicht angesteuert in dem zuletzt geschalteten Zustand beharrend ausgebildet ist.

Wie die Erfindung weiter vorsieht, können das Ventil oder die Ventile zur Steuerung des Drucks in den Druckleitungen des Kupplungssystems pulsweitenmoduliert oder pulsfrequenzmoduliert ansteuerbar sein, um insbesondere nachteilige Schwingungen im System zu vermeiden.

Weiterhin wird vorgeschlagen, dass in die Druckmittelzuleitung des Druckleitungssystems zumindest ein Rückschlagventil integriert ist. Durch diese Maßnahme werden das Druck- bzw. Betätigungssystem und somit auch eine eingerückte Kupplung gegen plötzlichen Druckverlust, beispielsweise infolge einer defekten Zuleitung, geschützt.

Des Weiteren hat es sich als zweckmäßig erwiesen, in das Druckleitungssystem zumindest einen Drucksensor zu integrieren, der mit der elektronischen Steuerungs- und Regelungseinheit signaltechnisch verbunden ist.

Wie die Erfindung weiter vorsieht, kann die Kupplung durch eine Nass-oder Trockenkupplung gebildet sein.

Ferner wird es als zweckmäßig erachtet, wenn ein etwaiger Ausfall der Spannungsversorgung dem Fahrer des Fahrzeugs optisch und/oder akustisch anzeigbar ist und/oder mit einem optisch angezeigten Handlungshinweis für den Fahrer einhergeht.

Zur Verdeutlichung der Erfindung ist der Beschreibung eine Zeichnung beigefügt.
In dieser zeigt:
- Fig. 1: ein Kupplungssystem gemäß der Erfindung in einer ersten Ausgestaltungsvariante,
- Fig. 2: ein solches Kupplungssystem in einer zweiten Ausgestaltungsform,
- Fig. 3: ein Kupplungssystem gemäß der Erfindung in einer dritten Variante und
- Fig. 4: ein Kupplungssystem gemäß der Erfindung in einer vierten Version.

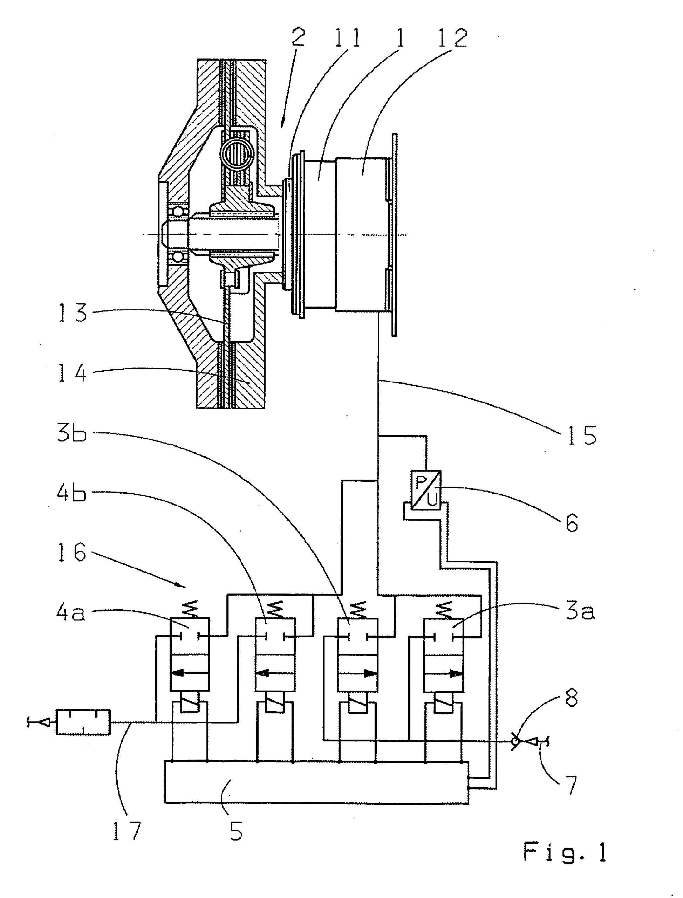

Demnach zeigt Fig. 1 sehr schematisch ein automatisch wirkendes Kupplungssystem zur Herstellung und Unterbrechung eines Kraftflusses zwischen einem Antriebsmotor und einem Getriebe eines Kraftfahrzeugs, welche beide nicht gesondert dargestellt sind.

Dieses Kupplungssystem beinhaltet eine als Reibkupplung ausgebildet Kupplung 2, die von einem als Kolben-Zylinder-Anordnung ausgebildeten Kupplungsaktuator 1 betätigbar ist. Die Kupplung 2 ist als so genannte "druck-geschlossene"-Kupplung ausgebildet, welche im unbetätigten Zustand mittels Federkraft in einem ausgerückten bzw. geöffneten Betriebszustand gehalten wird, jedoch gegen die Federkraft mittels zumindest des in ein Druckleitungssystem eingebundenen und druckbeaufschlagbaren Kupplungsaktuator 1 in einen eingerückten bzw. geschlossenen Betriebszustand überführbar ist.

Die Kupplung 2 kann dabei als Nass- oder Trockenkupplung ausgebildet sein. Der prinzipielle Aufbau einer solchen Kupplung 2 mit Kupplungsscheibe 13, Andruckplatte 14, Federelementen usw. ist hinlänglich bekannt, so dass auf die Erläuterung von Einzelheiten verzichtet werden kann. Diesbezüglich wird insbesondere auf die eingangs genannten Druckschriften aus dem Stand der Technik Bezug genommen.

Der Kupplungsaktuator 1 kann als pneumatisch oder hydraulisch betätigbare Kolben-Zylinder-Anordnung ausgebildet sein, so dass sich als Druckmittel entweder ein Druckgas wie Luft oder eine Flüssigkeit, wie beispielsweise ein geeignetes Drucköl, anbieten. In den hier beschriebenen Ausführungsformen der Erfindung werden jeweils pneumatisch betätigbare Kupplungssysteme beschrieben. Der Kupplungsaktuator 1 umfasst im Wesentlichen einen Kolben 11, welcher in einem druckbeaufschlagbaren Zylinder 12 axialverschiebbar geführt ist und mit seinem freien Ende auf radial innere Abschnitte der Druckplatte 14 der Kupplung 2 wirkt.

Die Zuleitung und Ableitung von Druckmittel in bzw. vom Kupplungsaktuator 1 erfolgt über eine in den Zylinderinnenraum des Zylinders 12 mündende Druckmittelleitung 15, die mit einer Steuerventilanordnung 16 eines Steuerungs- und Regelungsgerätes verbunden ist.

Wie Fig. 1 weiter entnehmbar ist, sind dem Kupplungsaktuator 1 in der Steuerventilanordnung 16 zwei regelbare Ventile 3a, 3b zur Befüllung und zwei regelbare Ventile 4a, 4b zur Entleerung desselben zugeordnet. Zwar können auch lediglich ein regelbares Ventil 3 zur Befüllung und ein regelbares Ventil 4 zur Entleerung vorgesehen sein (nicht näher gezeigt), jedoch werden aus Gründen der Redundanz und einer verbesserten Betätigungsdynamik jeweils mindestens zwei Ventile 3 bzw. 4 in der Steuerventilanordnung 16 bevorzugt.

Die regelbaren Ventile 3a, 3b und 4a, 4b sind durch an sich bekannte elektromagnetisch betätigbare 2/2-Wegeventile gebildet und mit einer elektronischen Steuerungs- und Regelungseinheit 5 signaltechnisch verbunden. Die Erfindung beschränkt sich jedoch nicht auf eine Steuerventilanordnung 16 mit 2/2-Wegeventile, sondern umfasst jedwede denkbare regelbare und für vorliegenden Anwendungszweck geeignete Steuerventile.

Ferner ist der elektronischen Steuerungs- und Regelungseinheit 5 ein Drucksensor 6 zugeordnet, der kontinuierlich Messwerte des aktuell am Kupplungsaktuator 1 anliegenden Druckes misst und der Steuerungs- und Regelungseinheit 5 zur Erzeugung von Stellsignalen für die Ansteuerung der Ventile 3a, 3b und 4a, 4b zur Verfügung stellt.

Erfindungsgemäß sind die federbelasteten Ventile 3a, 3b und 4a, 4b derart ausgebildet, dass bei einem Ausfall der Spannungsversorgung und demgemäß einem Ausfall der Ansteuerung derselben durch die elektronische Steuerungs- und Regelungseinheit 5 der aktuell eingestellte Betriebszustand der Kupplung 2, nämlich ausgerückter oder eingerückter Betriebszustand, erhalten bleibt.

Insoweit sind vorliegend sämtliche Ventile 3a, 3b und 4a, 4b zur Be- und Entlüftung als "nichtangesteuert-geschlossene" Ventile 3a, 3b und 4a, 4b ausgebildet, welches bedeutet, dass die Ruhestellung dieser Ventile ihrer Schließstellung entspricht. Zur Realisierung dieser Schaltfunktion wirken auf die Ventile 3a, 3b und 4a, 4b jeweils nicht näher bezeichnete Rückstellfedern, die die Ventile ohne Strombeaufschlagung in ihre Schließstellung führen.

Das Einrücken bzw. Schließen der Kupplung 2, zum Beispiel während des Anfahrens. Rangierens und bei Getriebeschaltvorgängen, erfolgt durch ein definiertes Ansteuern der Ventile 3a, 3b zur Belüftung bzw. Befüllung des Zylinders 12 des Kupplungsaktuators 1, wogegen das Ausrücken bzw. Öffnen der Kupplung 2 durch definiertes Ansteuern der Ventile 4a, 4b zur Entlüftung bzw. Entleerung des Zylinders 12 des Kupplungsaktuators 1 vollzogen wird. Die Rückstellbewegung des Kolbens 11 des Kupplungsaktuators 1 wird dabei durch eine nicht dargestellte Rückstellfeder angetrieben. Das Druckmittel gelangt dabei aus dem Zylinder 12 über die Druckmittelleitung 15 und die Ventile 4a, 4b der Steuerventilanordnung 16 zu der Abführleitung 17.

Die Dosierung des Gasvolumens (Luft) bei pneumatischer Druckbeaufschlagung des Kupplungsaktuators 1 bzw. Fluidvolumens (Drucköl) bei hydraulischer Beaufschlagung des Kupplungsaktuators 1 kann durch pulsweitenmodulierte oder durch pulsfrequenzmodulierte Ansteuerung der Ventile 3a, 3b; 4a, 4b erfolgen, wodurch nachteilige Schwingungen im Druckleitungssystem weitestgehend vermieden werden.

Das Übertragungsverhalten der Kupplung 2 beziehungsweise der Drehmomentverlauf werden durch Druckregelung mit Hilfe des oben erwähnten Drucksensors 6 und Takten der Ventile 3a, 3b; 4a, 4b zur Be- und Entlüftung realisiert.

Gesetzt den Fall, dass ein Ausfall der Spannungsversorgung zu verzeichnen ist, bleibt der aktuell bestehende Betriebszustand der Kupplung 2 als gewünschter Sollzustand in jedem Fall erhalten. Dies kann während der Fahrt der eingerückte Betriebszustand oder im Stillstand der ausgerückte Betriebszustand der Kupplung 2 sein, da die Ventile 3a, 3b; 4a, 4b wie erwähnt als "nichtangesteuert-geschlossene" Ventile 3a, 3b; 4a, 4b ausgebildet sind und somit einen unerwünschten Druckaufbau bzw. Druckabbau im Druckleitungssystem bei einem Ausfall der Spannungsversorgung absperren.

Während der Fahrt wird der aufgebaute Druck im System und demgemäß der Druck in dem Zylinder 12 des Kupplungsaktuators 1 zur Gewährleistung einer eingerückten Kupplung 2 und somit eines geschlossenen Antriebsstranges aufrechterhalten, wogegen im Stand und bei laufendem Motor zur Gewährleistung einer ausgerückten Kupplung 2 ein Druckaufbau im Zylinder 12 und demgemäß ein Anfahren des Kraftfahrzeugs durch ungewolltes Einrücken der Kupplung 2 verhindert wird.

Der Ausfall der Spannungsversorgung kann dabei dem Fahrzeugführer in vorteilhafter Weise optisch und/oder akustisch angezeigt werden und/oder mit einer optisch angezeigten Verhaltensweise für denselben einhergehen, so dass dieser beispielsweise während der Fahrt das Kraftfahrzeug sicher mit geschlossenem Antriebsstrang aus dem Verkehr führen und in eine geeignete Abstellposition bringen kann.

Um des Weiteren das Druckleitungs- bzw. Betätigungssystem und somit auch eine etwaige sich im eingerückten Zustand befindliche Kupplung 2 gegen plötzlichen Druckverlust infolge einer gegebenenfalls defekten Druckmittelzuleitung 7 zu schützen, ist in dieselbe ein Rückschlagventil 8 integriert.

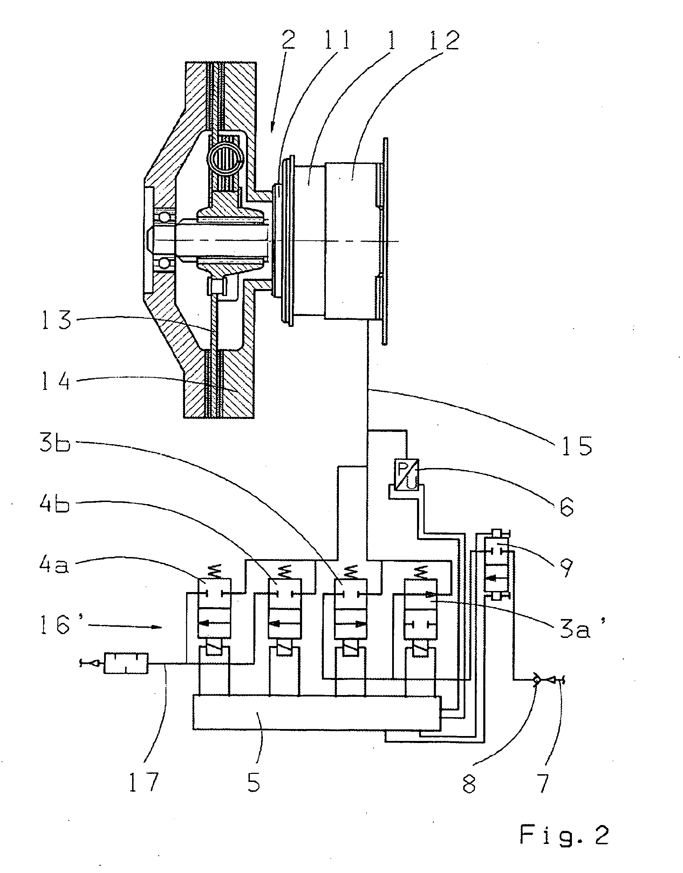

Die Steuerungsventilanordnung 16' gemäß der Ausführungsvariante nach Fig. 2 unterscheidet sich zur vorbeschriebenen Variante zunächst dadurch, dass wenigstens ein regelbares Ventil 3a, 3b zur Belüftung, vorliegend das Ventil 3a', als "nichtangesteuert-offenes" Ventil ausgebildet ist, während das regelbare Ventil 3b nach wie vor als "nichtangesteuert-geschlossenes" Ventil ausgebildet ist. Die regelbaren Ventile 4a und 4b sind wie im Beispiel gemäß der Fig. 1 als "nichtangesteuert-geschlossene" Ventile 4a, 4b ausgebildet. Im Hinblick auf das Ventil 3a' bedeutet dies, dass sich dieses Ventil 3a' in einer nicht mit einem Ansteuerstrom beaufschlagten Ruhesituation, also beispielsweise bei einem Ausfall der Steuerungs- und Regelungseinheit 5, in einer Schaltstellung befindet, in der es das Druckmittel passieren lässt.

Gesetzt den Fall, dass das Kraftfahrzeug fährt und die Spannungsversorgung ausfällt, dann wird die Kupplung 2 aufgrund der Ruheschaltstellung des Ventils 3a' eingerückt bzw. bleibt durch die permanente Versorgung des Kupplungsaktuators 1 mit Druckmittel sicher eingerückt beziehungsweise geschlossen, wodurch die Reichweite des Fahrens mit geschlossener Kupplung in dieser Siörfallsituation vorteilhaft verlängert ist und etwaige konstruktiv bedingte Undichtheiten des Druckleitungssystems ausgleichbar sind.

Für ein sich im Stillstand befindliches Kraftfahrzeug erfordert dieses Konzept zusätzliche Maßnahmen, da bei laufendem Motor, eingelegtem Gang und Ausfall der Spannungsversorgung für die elektronische Steuerungs- und Regelungseinheit 5 und/oder die Elektromagnete der regelbaren Ventile 3a', 3b; 4a, 4b das Kraftfahrzeug selbständig anfahren würde.

Um diesem Umstand wirkungsvoll begegnen zu können, ist den regelbaren Ventilen 3a', 3b zur Belüftung bzw. Befüllung des Zylinders 12 des Kupplungsaktuators 1 ein an sich bekanntes bistabiles Umschalt-Ventil 9 vorgeordnet, welches in Abhängigkeit vom aktuellen Betriebszustand der Kupplung 2 immer so geschaltet ist, dass bei Ausfall der Spannungsversorgung der aktuelle Betriebszustand als Sollzustand erhalten bleibt.

Demnach ist dieses Umschalt-Ventil 9 während der Fahrt auf Durchgang für Befüllen geschaltet, so dass eine permanente Druckversorgung des Kupplungsaktuators 1 ermöglicht wird. Wenn das Kraftfahrzeug zum Stillstand kommt, wird das bistabile Umschalt-Ventil 9 automatisch in Sperrstellung geschaltet, so dass bei einem Ausfall der Spannungsversorgung kein Druck zur Aktivierung des Kupplungsaktuators 1 aufgebaut und somit ein selbständiges Anfahren des Kraftfahrzeugs verhindert wird.

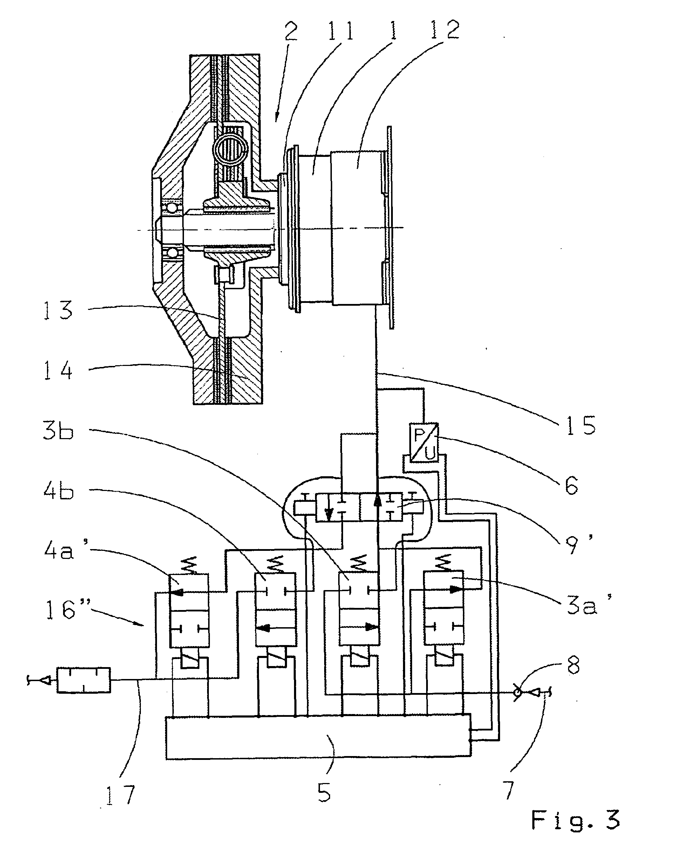

Die Steuerungsventilanordnung 16" gemäß der Ausführungsvariante nach Fig. 3 zeichnet sich dadurch aus, dass wenigstens ein regelbares Ventil 3a' zur Befüllung und ein regelbares Ventil 4a' zur Entleerung als "nichtangesteuert-offenes" Ventil 3a', 4a' ausgebildet sind.

Ferner ist den beiden "nichtangesteuert-offenen" Ventilen 3a' und 4a' ein bistabiles Umschalt-Ventil 9' derart zugeordnet sowie in dem Vor- und Rücklauf des Druckleitungssystems angeordnet und in Abhängigkeit vom aktuellen Betriebszustand der Kupplung 2 geschaltet, dass bei Ausfall der Spannungsversorgung der aktuelle Betriebszustand der Kupplung 2 erhalten bleibt.

Die beiden weiteren Ventile 3b und 4b zur Be- und Entlüftung des Zylinders 12 des Kupplungsaktuators 1 sind vorliegend als "nichtangesteuert-geschlossene" Ventile 3b; 4b ausgebildet. Sie können jedoch auch als hier nicht näher gezeigte "nichtangesteuert-offene" Ventile ausgebildet sein, welches dann jedoch erforderlich macht, dass diese ebenfalls dem bistabilen Umschalt-Ventil 9' unmittelbar unterzuordnen sind.

Das Einrücken bzw. Schließen der Kupplung 2 zum Beispiel während des Anfahrens, Rangierens und bei Getriebeschaltungen erfolgt durch definiertes Ansteuern des vorliegend "nichtangesteuert-offenen" Ventils 3a' und/oder des "nichtangesteuert-geschlossenen" Ventils 3b zur Befüllung in Kombination mit dem entsprechend anzusteuernden bistabilen Umschalt-Ventil 9'.

Demgegenüber erfolgt das Ausrücken bzw. Öffnen der Kupplung 2 durch definiertes Ansteuern des vorliegend "nichtangesteuert-offenen" Ventils 4a und/oder des "nichtangesteuert-geschlossenen" Ventils 4b zur Entlüftung in Kombination mit dem entsprechend anzusteuernden bistabilen Umschalt-Ventil 9'.

Bei Ausfall der Spannungsversorgung während der Fahrt wird die Kupplung 2 eingerückt bzw. bleibt sicher geschlossen, da über das entsprechend auf Durchgang für Befüllen und Sperrstellung für Entleeren geschaltete bistabile Umschalt-Ventil 9' sowie das "nichtangesteuert-offene" Ventil 3a' zur Belüftung der Kupplungsaktuator 1 permanent mit Druck beaufschlagt wird.

Bei stehendem Kraftfahrzeug wird das bistabile Umschalt-Ventil 9' in Sperrstellung für Befüllen und Durchgang für Entleeren geschaltet, so dass bei Ausfall der Spannungsversorgung kein Druck im Kupplungsaktuator 1 aufgebaut werden kann und ein selbständiges Anfahren des Kraftfahrzeugs verhindert ist.

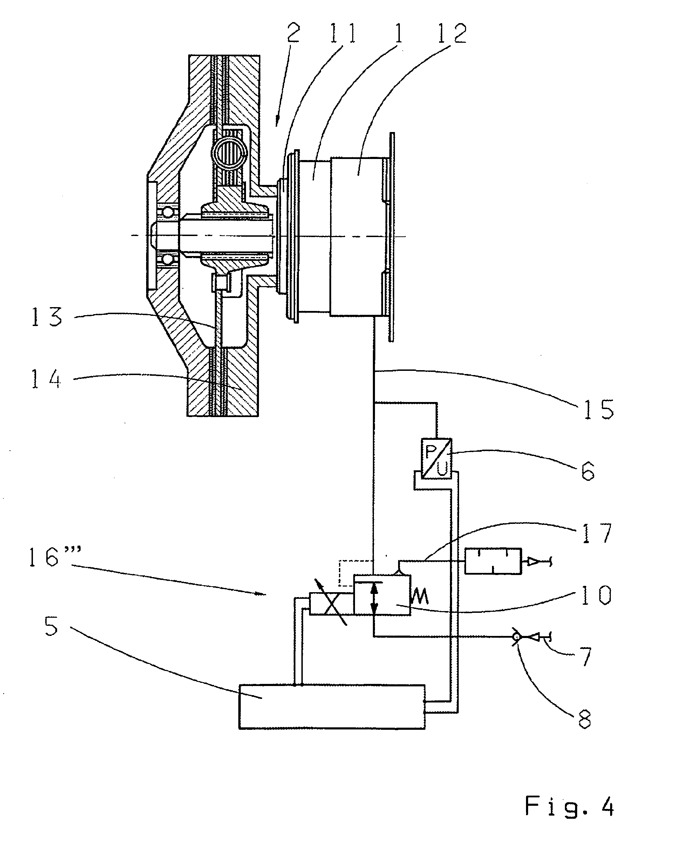

Das in Fig. 4 dargestellte Ausführungsbeispiel unterscheidet sich hinsichtlich der Steuerungsventilanordnung 16'" von allen anderen vorbeschriebenen Steuerungsventilanordnungen 16, 16' und 16" gemäß Fig. 1 bis Fig. 3 dadurch, dass dieses mit einem einzigen regelbaren Ventil, nämlich mit einem an sich bekannten Druckregel-Ventil 10 auskommt.

Das Ein- und Ausrücken der Kupplung 2 bzw. das Ausfallverhalten der Kupplungssteuerung kann in Anlehnung an die vorbeschriebenen Ausführungsbeispiele durch die konstruktive Ausgestaltung des genannten Druckregel-Ventils 10 bestimmt werden, welches nämlich elektrisch nicht angesteuert offen oder elektrisch nicht angesteuert geschlossen sein kann, oder elektrisch nicht angesteuert im zuletzt geschalteten Zustand verharrt.

Die Wirkungen und eventuell einzuleitende Maßnahmen entsprechen denen der Varianten gemäß der Fig. 1 bis 3.

Das Übertragungsverhalten der Kupplung 2 (Drehmomentverlauf) wird durch die Druckregelung mit Hilfe des Druckregel-Ventils 10 angepasst. Ein Drucksensor 6 kann das System zusätzlich überwachen.

### Bezugszeichen

- 1: Kupplungsaktuator
- 2: Kupplung
- 3a: regelbares Ventil zur Befüllung des Zylinders 12
- 3a': regelbares Ventil zur Befüllung des Zylinders 12
- 3b: regelbares Ventil zur Befüllung des Zylinders 12
- 4a: regelbares Ventil zur Entleerung des Zylinders 12
- 4a': regelbares Ventil zur Entleerung des Zylinders 12
- 4b: regelbares Ventil zur Entleerung des Zylinders 12
- 5: Steuerungs- und Regelungseinheit
- 6: Drucksensor
- 7: Druckmittelzuleitung
- 8: Rückschlagventil
- 9: Umschalt-Ventil
- 9': Umschalt-Ventil
- 10: Druckregel-Ventil
- 11: Kolben
- 12: Zylinder
- 13: Kupplungsscheibe
- 14: Andruckplatte
- 15: Druckmittelleitung
- 16: Steuerventilanordnung
- 16': Steuerventilanordnung
- 16": Steuerventilanordnung
- 16''': Steuerventilanordnung
- 17: Abführleitung

## Patentansprüche

1. Kupplungssystem zur Herstellung und Unterbrechung eines Kraftflusses zwischen Motor und Getriebe eines Kraftfahrzeuges, mit einer Kupplung (2), die sich im unbetätigten Zustand in einem ausgerückten Betriebszustand befindet, jedoch mittels zumindest eines pneumatisch oder hydraulisch druckbeaufschlagbaren Kupplungsaktuators (1) in einen eingerückten Betriebszustand überführbar ist, sowie mit einem oder mehreren in einem Druckleitungssystem einer Steuerventilanordnung (16) angeordneten, den Volumenstrom des Druckmittels regelnden Ventilen, die von einer elektronischen Steuerungs- und Regelungseinheit (5) elektrisch ansteuerbar sind, **dadurch gekennzeichnet, dass** die Ventile (3a, 3a', 3b; 4a, 4a', 4b; 9) oder das Ventil (10) derart ausgebildet sind, dass bei einem Ausfall der Spannungsversorgung und demgemäß Ausfall der Ansteuerung der Ventile (3a, 3b; 4a, 4b; 9) oder des Ventils (10) durch die elektronische Steuerungs- und Regelungseinheit (5) der aktuell eingestellte Betriebszustand der Kupplung (2), nämlich ausgerückter oder eingerückter Betriebszustand, erhalten bleibt, so dass bei einem Ausfall der Spannungsversorgung während der Fahrt und bei inaktiver Schaltung mit eingelegtem Gang die Übertragung des vollen Kupplungsmomentes oder eines definierten Teils davon gewährleistet ist, und dass bei einem Ausfall der Spannungsversorgung bei stehendem Kraftfahrzeug, laufendem Motor und geschaltetem Getriebegang das selbständige Einrücken der Kupplung verhindert ist.

2. Kupplungssystem nach Anspruch 1, **gekennzeichnet durch** zumindest ein regelbares Ventil (3a, 3b) zur Befüllung und zumindest ein regelbares Ventil (4a,4b) zur Entleerung des Kupplungsaktuators (1), wobei sämtliche Ventile (3a, 3b; 4a, 4b) als "nichtangesteuert-geschlossene" Ventile (3a, 3b; 4a, 4b) ausgebildet sind.

3. Kupplungssystem nach Anspruch 1, **gekennzeichnet durch** zumindest ein regelbares Ventil (3a', 3b) zur Befüllung und zumindest ein regelbares Ventil (4a, 4b) zur Entleerung des Kupplungsaktuators (1), wobei wenigstens ein regelbares Ventil zur Befüllung als "nichtangesteuert-offenes" Ventil (3a') ausgebildet ist, wogegen das oder die Ventile (4a, 4b) zur Entleerung als "nichtangesteuert-geschlossene" Ventile (4a, 4b) ausgebildet sind, und bei dem den regelbaren Ventilen (3a, 3b) zur Befüllung ein bistabiles Umschalt-Ventil (9) drucktechnisch vorgeordnet ist, welches in Abhängigkeit vom aktuellen Betriebszustand der Kupplung (2) derart geschaltet ist, dass bei einem Aus-fall der Spannungsversorgung der aktuelle Betriebszustand der Kupplung (2) erhalten bleibt.

4. Kupplungssystem nach Anspruch 1, **gekennzeichnet durch** zumindest ein regelbares Ventil (3a', 3b) zur Befüllung und zumindest ein regelbares Ventil (4a', 4b) zur Entleerung des Kupplungsaktuators (1), wobei wenigstens ein regelbares Ventil (3a') zur Befüllung und ein regelbares Ventil (4a') zur Entleerung als "nichtangesteuert-offenes" Ventil (3a', 4a') ausgebildet sind, und bei dem den "nichtangesteuert-offenen" Ventilen (3a", 4a') ein bistabiles Umschalt-Ventil (9') derart drucktechnisch zugeordnet sowie in dem Vor- und Rücklauf des Druckleitungssystems angeordnet und in Abhängigkeit vom aktuellen Betriebszustand der Kupplung (2) geschaltet ist, dass bei einem Ausfall der Spannungsversorgung der aktuelle Betriebszustand der Kupplung (2) erhalten bleibt.

5. Kupplungssystem nach zumindest einem der Ansprüche 2 bis 4, **durch gekennzeichnet, dass** zur Befüllung und Entleerung des Kupplungsaktuators (1) jeweils mindestens zwei Ventile (3a, 3a', 3b; 4a, 4a', 4b) vorgesehen sind.

6. Kupplungssystem nach zumindest einem der Ansprüche 2 bis 5, **dadurch gekennzeichnet, dass** die Ventile (3a, 3a', 3b; 4a, 4a', 4b) zur Befüllung und Entleerung des Kupplungsaktuators (1) durch 2/2-Wegeventile gebildet sind.

7. Kupplungssystem nach Anspruch 1, **gekennzeichnet durch** ein Druckregel-Ventil (10), welches derart ausgebildet ist, dass dieses eine Ansteuerungssituation berücksichtigend als
- elektrisch nicht angesteuert offen ausgebildet ist, oder als
- elektrisch nicht angesteuert geschlossen ausgebildet ist, oder als
- elektrisch nicht angesteuert in dem zuletzt geschalteten Zustand verharrend ausgebildet ist.

8. Kupplungssystem nach zumindest einem der Ansprüche 1 bis 7, **dadurch gekennzeichnet, dass** das Ventil (10) oder die Ventile (3a, 3a', 3b; 4a, 4a', 4b; 9) zur Steuerung des Drucks im Druckleitungssystem der Steuerventilanordnung (16, 16', 16", 16"') pulsweitenmoduliert oder pulsfrequenzmoduliert ansteuerbar sind.

9. Kupplungssystem nach zumindest einem der Ansprüche 1 bis 8, **dadurch gekennzeichnet, dass** in eine Druckmedienzuleitung (7) des Druckleitungssystems ein Rückschlagventil (8) integriert ist.

10. Kupplungssystem nach zumindest einem der Ansprüche 1 bis 9, **dadurch gekennzeichnet, dass** in das Druckleitungssystem zumindest ein Drucksensor (6) integriert ist, der mit der elektronischen Steuerungs- und Regelungseinheit (5) signaltechnisch verbunden ist.

11. Kupplungssystem nach zumindest einem der Ansprüche 1 bis 10, **dadurch gekennzeichnet, dass** die Kupplung (2) als Nass- oder Trockenkupplung ausgebildet ist.

12. Kupplungssystem nach zumindest einem der Ansprüche 1 bis 11, **dadurch gekennzeichnet, dass** ein etwaiger Ausfall der Spannungsversorgung dem Fahrzeugführer optisch und/oder akustisch anzeigbar ist.

13. Kupplungssystem nach Anspruch 12, **dadurch gekennzeichnet, dass** ein etwaiger Ausfall der Spannungsversorgung durch eine optisch anzeigbaren Handlungsanweisung für den Fahrzeugführer signalisiert wird.

## Claims

1. Clutch system for producing and interrupting a force flow between the engine and the transmission of a motor vehicle, having a clutch (2) which is situated in a disengaged operating state in the non-actuated state, but can be transferred into an engaged operating state by means of at least one clutch actuator (1) which can be loaded with pressure pneumatically or hydraulically, and having one or more valves which are arranged in a pressure-line system of a control-valve arrangement (16), regulate the volumetric flow of the pressure medium, and can be actuated electrically by an electronic control and regulating unit (5), **characterized in that** the valves (3a, 3a', 3b; 4a, 4a', 4b; 9) or the valve (10) are/is configured in such a way that, in the case of a failure of the electricity supply and accordingly a failure of the actuation of the valves (3a, 3b; 4a, 4b; 9) or the valve (10) by the electronic control and regulating unit (5), the currently set operating state of the clutch (2), namely disengaged or engaged operating state, is maintained, with the result that, in the case of a failure of the electricity supply during driving and in the case of an inactive gearshift with an engaged gear, the transmission of the full clutch moment or of a defined part thereof is ensured, and that, in the case of a failure of the electricity supply when the motor vehicle is at a standstill, the engine is running and a transmission gear is engaged, the automatic engagement of the clutch is prevented.

2. Clutch system according to Claim 1, **characterized by** at least one controllable valve (3a, 3b) for filling and at least one controllable valve (4a, 4b) for emptying the clutch actuator (1), all of the valves (3a, 3b; 4a, 4b) being configured as "non-actuated/closed" valves (3a, 3b; 4a, 4b).

3. Clutch system according to Claim 1, **characterized by** at least one controllable valve (3a', 3b) for filling and at least one controllable valve (4a, 4b) for emptying the clutch actuator (1), at least one controllable valve for filling being configured as a "non-actuated/open" valve (3a'), whereas the valve or valves (4a, 4b) for emptying is/are configured as "non-actuated/closed" valves (4a, 4b), and in which clutch system a bistable switchover valve (9) is arranged in pressure terms in front of the controllable valves (3a, 3b) for filling, which bistable switchover valve (9) is switched as a function of the current operating state of the clutch (2) in such a way that, in the case of a failure of the electricity supply, the current operating state of the clutch (2) is maintained.

4. Clutch system according to Claim 1, **characterized by** at least one controllable valve (3a', 3b) for filling and at least one controllable valve (4a', 4b) for emptying the clutch actuator (1), at least one controllable valve (3a') for filling and one controllable valve (4a') for emptying being configured as a "non-actuated/open" valve (3a', 4a'), and in which clutch system a bistable switchover valve (9') is assigned in pressure terms to the "non-actuated/open" valves (3a'; 4a') in such a way, and is arranged in the inflow line and return line of the pressure line system and is switched as a function of the current operating state of the clutch (2), that, in the case of a failure of the electricity supply, the current operating state of the clutch (2) is maintained.

5. Clutch system according to at least one of Claims 2 to 4, **characterized in that** in each case at least two valves (3a, 3a', 3b; 4a, 4a', 4b) are provided for filling and emptying the clutch actuator (1).

6. Clutch system according to at least one of Claims 2 to 5, **characterized in that** the valves (3a, 3a', 3b; 4a, 4a', 4b) for filling and emptying the clutch actuator (1) are formed by 2/2-way valves.

7. Clutch system according to Claim 1, **characterized by** a pressure-control valve (10) which is configured in such a way that, taking an actuating situation into consideration, it
- is of electrically non-actuated/open configuration, or
- is of electrically non-actuated/closed configuration, or
- is configured to remain in the last-switched state when it is not actuated electrically.

8. Clutch system according to at least one of Claims 1 to 7, **characterized in that** the valve (10) or the valves (3a, 3a', 3b; 4a, 4a', 4b; 9) for controlling the pressure in the pressure line system of the control-valve arrangement (16, 16', 16", 16"') can be actuated in a pulse-width-modulated or pulse-frequency-modulated manner.

9. Clutch system according to at least one of Claims 1 to 8, **characterized in that** a non-return valve (8) is integrated into a pressure-medium feed line (7) of the pressure line system.

10. Clutch system according to at least one of Claims 1 to 9, **characterized in that** at least one pressure sensor (6) which is connected in terms of signalling technology to the electronic control and regulating unit (5) is integrated into the pressure line system.

11. Clutch system according to at least one of Claims 1 to 10, **characterized in that** the clutch (2) is configured as a wet or dry clutch.

12. Clutch system according to at least one of Claims 1 to 11, **characterized in that** any failure of the electricity supply can be indicated optically and/or acoustically to the vehicle driver.

13. Clutch system according to Claim 12, **characterized in that** any failure of the electricity supply is signalled by a command to act for the vehicle driver, which command can be indicated optically.

## Revendications

1. Système d'embrayage pour établir et interrompre un flux de force entre le moteur et la transmission d'un véhicule automobile, comprenant un embrayage (2), qui se trouve, dans l'état non activé, dans un état de fonctionnement débrayé, mais qui peut être transféré au moyen d'au moins un actionneur d'embrayage (1) pouvant être sollicité en pression de manière pneumatique ou hydraulique dans un état de fonctionnement embrayé, et comprenant aussi une ou plusieurs soupapes disposées dans un système de conduite sous pression d'un agencement de soupapes de commande (16), régulant le débit volumique du fluide sous pression, lesquelles peuvent être commandées électriquement par une unité de commande et de réglage électronique (5), **caractérisé en ce que** les soupapes (3a, 3a', 3b ; 4a, 4a', 4b ; 9) ou la soupape (10) sont réalisées de telle sorte que dans le cas d'une panne d'alimentation en tension et en conséquence d'une panne de la commande des soupapes (3a, 3b ; 4a, 4b ; 9) ou de la soupape (10) par l'unité de commande et de réglage électronique (5), l'état de fonctionnement effectivement enclenché de l'embrayage (2), à savoir l'état de fonctionnement embrayé ou débrayé, reste maintenu, de sorte que dans le cas d'une panne de l'alimentation en tension pendant la conduite, et lorsque le circuit est inactif, avec une vitesse enclenchée, le transfert du couple d'embrayage total ou d'une partie définie du couple d'embrayage soit garanti, et de sorte que dans le cas d'une panne de l'alimentation en tension lorsque le véhicule est à l'arrêt, que le moteur tourne et que la vitesse de la transmission est enclenchée, l'embrayage automatique de l'embrayage soit empêché.

2. Système d'embrayage selon la revendication 1, **caractérisé par** au moins une soupape réglable (3a, 3b) pour le remplissage et au moins une soupape réglable (4a, 4b) pour la vidange de l'actionneur d'embrayage (1), toutes les soupapes (3a, 3b ; 4a, 4b) étant réalisées sous forme de soupapes "fermées en l'absence de commande" (3a, 3b ; 4a, 4b).

3. Système d'embrayage selon la revendication 1, **caractérisé par** au moins une soupape réglable (3a', 3b) pour le remplissage et au moins une soupape réglable (4a, 4b) pour la vidange de l'actionneur d'embrayage (1), au moins une soupape réglable pour le remplissage étant réalisée sous forme de soupape "ouverte en l'absence de commande" (3a'), tandis que la ou les soupapes (4a, 4b) pour la vidange sont réalisées sous forme de soupapes "fermées en l'absence de commande" (4a, 4b), et une soupape d'inversion bistable (9) étant montée en amont, du point de vue de la pression, par rapport aux soupapes réglables (3a, 3b) pour le remplissage, laquelle est commutée en fonction de l'état de fonctionnement actuel de l'embrayage (2), de telle sorte que dans le cas d'une panne de l'alimentation en tension, l'état de fonctionnement actuel de l'embrayage (2) soit conservé.

4. Système d'embrayage selon la revendication 1, **caractérisé par** au moins une soupape réglable (3a', 3b) pour le remplissage et au moins une soupape réglable (4a', 4b) pour la vidange de l'actionneur d'embrayage (1), au moins une soupape réglable (3a') pour le remplissage et une soupape réglable (4a') pour la vidange étant réalisées sous forme de soupape "ouverte en l'absence de commande" (3a', 4a'), et une soupape d'inversion bistable (9') étant associée du point de vue de la pression aux soupapes "ouvertes en l'absence de commande" (3a', 4a'), étant disposée dans l'entrée et le retour du système de conduite de pression, et étant commutée en fonction de l'état de fonctionnement actuel de l'embrayage (2), de telle sorte que dans le cas d'une panne de l'alimentation en tension, l'état de fonctionnement actuel de l'embrayage (2) soit conservé.

5. Système d'embrayage selon au moins l'une quelconque des revendications 2 à 4, **caractérisé en ce que** pour le remplissage et la vidange de l'actionneur d'embrayage (1), on prévoit à chaque fois au moins deux soupapes (3a, 3a', 3b ; 4a, 4a', 4b).

6. Système d'embrayage selon au moins l'une quelconque des revendications 2 à 5, **caractérisé en ce que** les soupapes (3a, 3a', 3b ; 4a, 4a', 4b) pour le remplissage et la vidange de l'actionneur d'embrayage (1) sont formées par des soupapes à 2/2 voies.

7. Système d'embrayage selon la revendication 1, **caractérisé par** une soupape de régulation de pression (10), qui est réalisée de telle sorte qu'elle soit réalisée, en tenant compte d'une situation de commande,
- de manière ouverte en l'absence de commande électrique, ou
- de manière fermée en l'absence de commande électrique, ou
- de manière à rester dans le dernier état commuté en l'absence de commande électrique.

8. Système d'embrayage selon au moins l'une quelconque des revendications 1 à 7, **caractérisé en ce que** la soupape (10) ou les soupapes (3a, 3a', 3b ; 4a, 4a', 4b; 9) pour la commande de la pression dans le système de conduite sous pression de l'agencement de soupapes de commande (16, 16', 16", 16"') peuvent être commandées de manière modulée en largeur d'impulsion ou modulée en fréquence d'impulsion.

9. Système d'embrayage selon au moins l'une quelconque des revendications 1 à 8, **caractérisé en ce qu'**une soupape de non retour (8) est intégrée dans une conduite d'alimentation en fluide sous pression (7) du système de conduite sous pression.

10. Système d'embrayage selon au moins l'une quelconque des revendications 1 à 9, **caractérisé en ce qu'**au moins un capteur de pression (6) est intégré dans le système de conduite sous pression, lequel est connecté par une technique de signaux à l'unité de commande et de réglage électronique (5).

11. Système d'embrayage selon au moins l'une quelconque des revendications 1 à 10, **caractérisé en ce que** l'embrayage (2) est réalisé sous forme d'embrayage humide ou sec.

12. Système d'embrayage selon au moins l'une quelconque des revendications 1 à 11, **caractérisé en ce qu'**une panne éventuelle de l'alimentation en tension peut être indiquée au conducteur du véhicule de manière optique et/ou acoustique.

13. Système d'embrayage selon la revendication 12, **caractérisé en ce qu'**une panne éventuelle de l'alimentation en tension peut être signalée par un avis de service pouvant être indiqué optiquement au conducteur du véhicule.
